# EUROPEAN PATENT APPLICATION

(11) **EP 1 190 799 A2**
(43) Date of publication of application: **27.03.2002**
(21) Application number: 01120631.5
(22) Date of filing: 29.08.2001
(51) Int. Cl.: B23D 45/12

(54) **Device for machining a solid carbide bar**

(30) Priority: 05.09.2000 IT MN000039
(71) Applicant: Radeco Sistemi S.R.L., 46030 Cerese di Virgilio (Mantova) (IT)
(72) Inventor: Spagna, Alessandro, 46030 Virgilio (Mantova) (IT)
(74) Representative: Modiano, Guido, Dr.-Ing.

(57) **Abstract**

A device for machining a solid carbide bar which comprises means (10,11) suitable to support the bar (B) and turn the bar during machining, and a wheel (22) for cutting the bar, which is supported by means (20) suitable to move the wheel (22) toward and away from the bar (B).

## Description

The invention relates to a device for machining a hard metal or solid carbide bar.

It is known that the practice of manufacturing metal machining tools, such as drill bits or milling cutters, by using a sintered material that offers particular functional characteristics and is known as solid carbide, is widespread.

Currently, such tools are produced by successive cuttings of a bar of adequate length and by transferring the resulting cut blanks, each meant to form a tool, to a sharpening machine, which provides a perimetric bevel on one of the end faces and a pointed tip at the other face if a drill bit is to be obtained.

The means currently offered by the prior art, however, produce cut blanks whose two end faces are not perfectly perpendicular to the longitudinal axis of the blanks, with consequent problems in the balancing of the resulting tools.

The aim of the present invention is therefore to provide a device for machining a solid carbide bar which is capable of forming cut blanks whose end faces are perfectly perpendicular to the longitudinal axis of the cut blanks and can also perform, on the cut blanks obtained by cutting the bar, the above cited machining operations, which are currently entrusted to sharpening machines.

This aim is achieved by a device for machining a solid carbide bar, according to the invention, characterized in that it comprises means suitable to support the bar and turn said bar during machining, and a wheel for cutting said bar, which is supported by means suitable to move said wheel toward and away from the bar.

Further characteristics and advantages of the present invention will become better apparent from the description of a preferred but not exclusive embodiment of the invention, illustrated only by way of non-limitative example in the accompanying drawings, wherein:
Figure 1 is a perspective view of the device according to the invention;
Figures 2, 3, 4 are views of the cutting wheel comprised within the device in three different machining steps;
Figures 5 to 10 are schematic views of some steps of the operation of the device.

With reference to the figures, the reference numerals 1 and 2 respectively designate two heads which can slide on longitudinal guides 3, 4 and 5, 6 which are associated with the footing 7 and are provided with independent motorization means which comprise, for the head 1, a screw 8 actuated by a gearmotor 8a and, for the head 2, a screw 9 actuated by a gearmotor 9a, the screws being coupled to respective female threads provided on the heads.

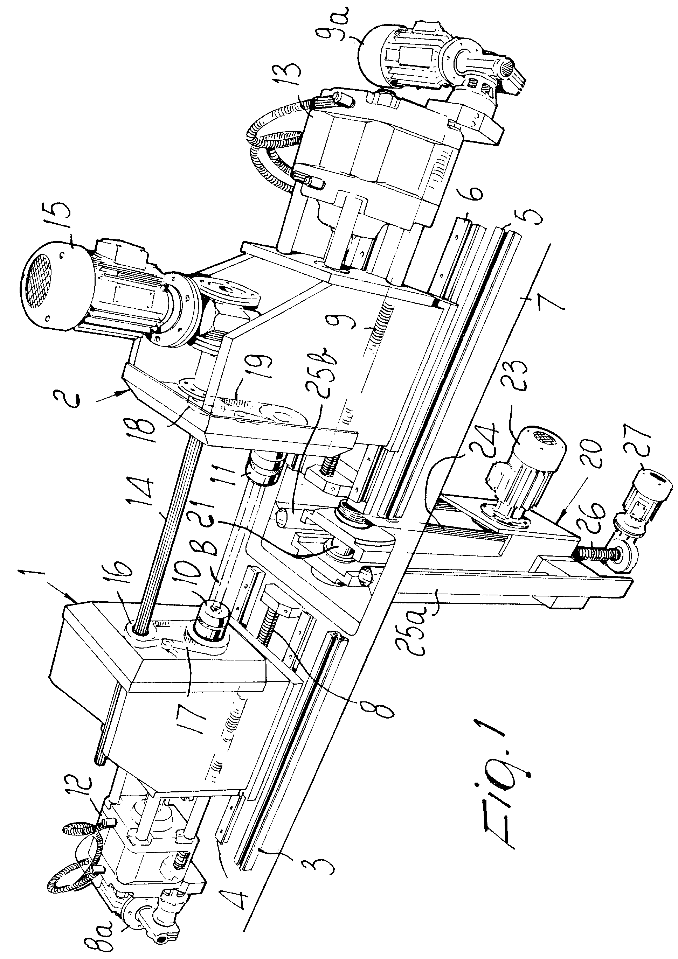

The heads 1 and 2 respectively support mandrels 10 and 11 suitable to grip the bar being machined, which is shown in dot-and-dash lines and designated by the letter B in Figure 1 and is arranged longitudinally. The mandrels are provided with independent opening and closure means which comprise an actuation cylinder 12 for the mandrel 10 and an actuation cylinder 13 for the mandrel 11, and with means for simultaneous rotation of the mandrels.

Such means comprise a splined shaft 14 actuated by a gearmotor 15 supported by the head 2, said shaft being slidingly associated with a hub 16 provided on the head 1, which is kinematically connected by means of a toothed belt 17 to the mandrel 10 and to a hub 18 provided on the head 2, which is kinematically connected by means of a toothed belt 19 to the mandrel 11.

The device according to the invention further comprises a slider 20, which supports a driving shaft 21 of a cutting wheel 22, not shown assembled in Figure 1 but visible in the subsequent figures, shaft 21 being actuated by movement means which are located on board the slider and comprise a gearmotor 23 and a transmission belt 24.

The slider 20 can slide on guides 25a and 25b arranged on a transverse plane, and therefore at right angles to the axis of a bar held by the mandrels 10 and 11, and is motorized so as to produce movements of the cutting wheel 22 toward and away from the bar by virtue of a screw 26 actuated by a gearmotor 27 and mated with a female thread provided in the slider.

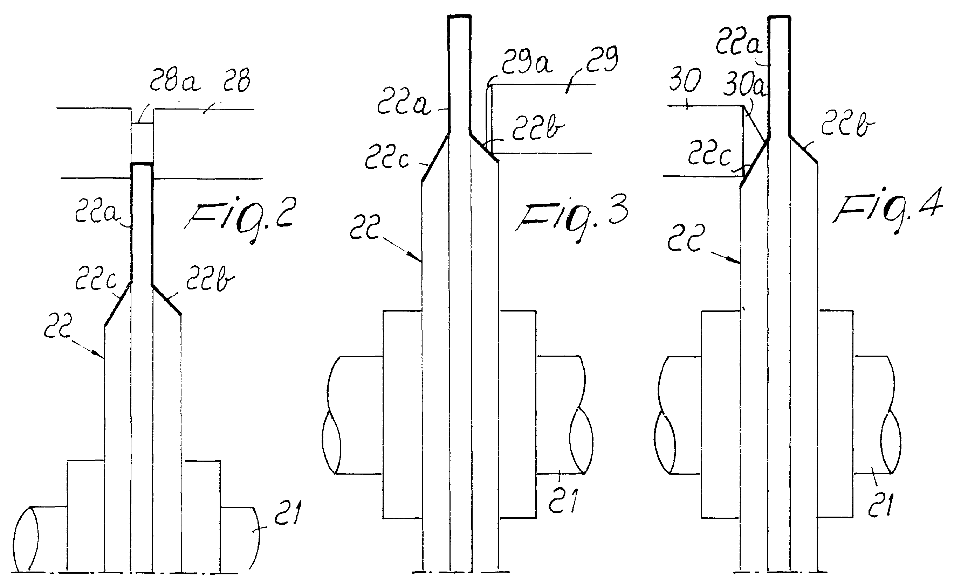

The cutting wheel 22 comprises a cutting edge 22a which is capable of cropping the bar being machined, such as 28a for the bar 28 of Figure 2, a cutting edge 22b for forming a bevel such as 29a at the peripheral region of a bar such as 29 in Figure 3, and a cutting edge 22c which is suitable to form a pointed tip such as 30a on a drill bit such as 30 in Figure 4.

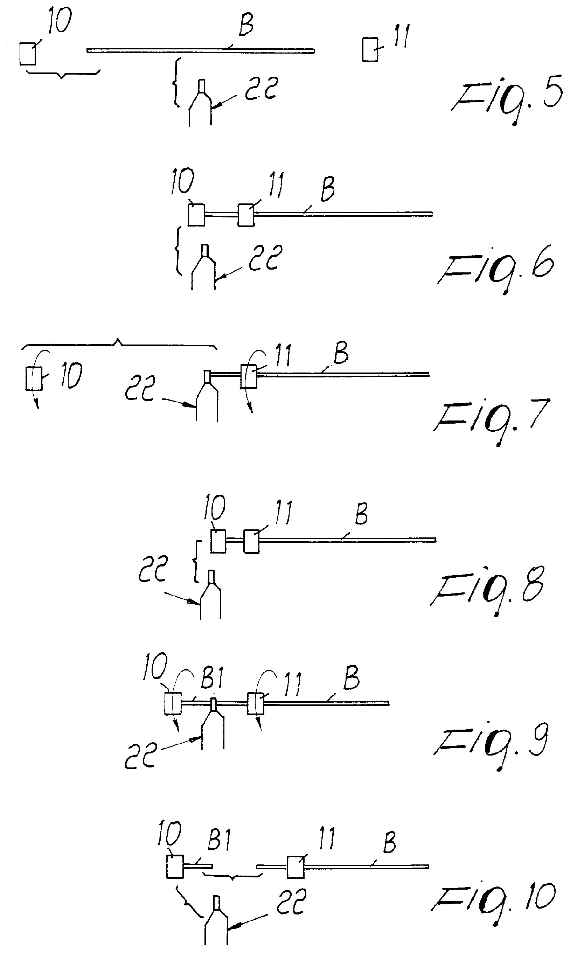

The device is completed by means for the sequential loading of bars to be machined and for picking up the gradually machined cut blanks, not shown in the figure; such means are coordinated with the illustrated device so as to provide the operation that is now described with reference to Figures 5 to 10 in its essential aspects, ignoring adjustment steps which are gradually performed in order to obtain exact dimensional characteristics of the manufactured blanks and ensure uniform wear of the cutting wheel.

In the above figures, the letter B again designates the bar to be machined, the numerals 10 and 11 again designate the mandrels connected to the heads 1 and 2, and the numeral 22 designates the cutting wheel.

When the heads 1 and 2 are at their maximum mutual distance, a bar B to be machined is moved by the loading means into a position in which it is aligned with the mandrels 10 and 11, while the slider that supports the cutting wheel 22 is at its lower stroke limit: this is the situation shown in Figure 5.

The open mandrel 11 reaches the position shown in Figure 6, the loading means release the bar, which is by now supported by the mandrel, and the closed mandrel 10 moves forward, pushing in front of itself the bar up to the position of Figure 6.

The bar is now in such a position to allow machining to start: as shown in Figure 7, the mandrel 10 retracts, the mandrel 11 closes and begins to turn, causing the rotation of the bar, and the cutting wheel 22 can therefore face the bar and, by means of the cutting edge 22b, provide a peripheral bevel thereon.

At this point, the rotation of the mandrels 10 and 11 stops, the cutting wheel 22 descends, and the open mandrel 10 moves forward so as to surround the bar as shown in Figure 8, and then immediately closes again while the mandrel 11 opens.

While the mandrel 11 is open, the mandrel 10 retracts, carrying the bar with it, as shown in Figure 9. The mandrel 11 closes and the mandrels start to turn, turning the bar so that the cutting wheel 22 can crop the bar, forming the first cut blank B1 as shown in Figure 9, and forming the bevel on the cropped bar B.

The cutting wheel 22 now descends, the mandrels stop turning, and the mandrel 11 retracts, carrying with it the cropped bar B, while the cut blank B1 remains gripped by the mandrel 10, all as shown in Figure 10.

If the cut blank B1 is meant to form a milling cutter, the machining thereon is determined and the pick-up means, which usually coincide with the bar loading means, remove it.

If instead the cut blank is meant to form a drill bit, the cutting wheel 22 rises, after the mandrels have started turning, in order to provide with the cutting edge 22c the end point of the bit, thus completing the machining process and making the cut blank available to the pick-up means.

In both cases, the machining on the bar B continues in an obvious manner in order to obtain successive cut blanks.

By turning the bar during machining, the conditions for cropping it have been optimized, providing cut blanks whose end faces are perfectly perpendicular to their longitudinal axis.

The described invention is susceptible of numerous modifications and variations, all of which are within the scope of the same inventive concept: all the details may further be replaced with other technically equivalent elements.

The disclosures in Italian Patent Application No. MN2000A000039 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for machining a solid carbide bar, **characterized in that** it comprises means suitable to support the bar and turn said bar during machining, and a wheel for cutting said bar, which is supported by means suitable to move said wheel toward and away from the bar.

2. The device according to claim 1, **characterized in that** it comprises:
two heads which can slide on longitudinal guides which are associated with a footing and are provided with independent motorization means, each suitable to support a mandrel for gripping the bar arranged in a longitudinal direction, said mandrels being provided with independent opening and closure means and with means for producing simultaneous rotation of the mandrels; and
a motorized slider, which can slide on guides arranged on a transverse plane and is suitable to support a wheel for cutting said bar.

3. The device according to claim 2, **characterized in that** each head is provided with respective movement means, which comprise a kinematic pair formed by a motorized screw, supported by the footing parallel to the sliding guides, and by a female thread, which is associated with said head.

4. The device according to claim 2, **characterized in that** the means for opening and closing the mandrel supported by each head comprise an actuation cylinder associated with said head.

5. The device according to claim 2, **characterized in that** the means for producing the simultaneous rotation of the mandrels supported by the two heads comprise a splined shaft which is actuated by a motor supported by one of said heads, slidingly associated with a hub for each head which is kinematically connected to the mandrel that is present on the corresponding head.

6. The device according to claim 1, **characterized in that** the motorized slider for supporting the cutting wheel is motorized by means of a screw-and-nut kinematic pair.

7. The device according to claim 1, **characterized in that** said means for moving the cutting wheel are supported on board the slider that supports said cutting wheel.

8. The device according to claim 1, **characterized in that** the cutting wheel comprises a cutting edge for cropping the bar which is flanked on opposite sides by a cutting edge for forming a bevel in a peripheral region of the bar and by a cutting edge for forming a drill bit tip.
